# EUROPÄISCHE PATENTANMELDUNG

(11) **EP 2 006 550 A1**
(43) Veröffentlichungstag der Anmeldung: **24.12.2008**
(21) Anmeldenummer: 07012342.7
(22) Anmeldetag: 23.06.2007
(51) Int. Cl.: F16B 7/04, F16B 12/20

(54) **Verbindungsvorrichtung**

(71) Anmelder: Hestex Systems B.V., 7332 BE Apeldoorn (NL)
(72) Erfinder: Offenbroich, Adrian, 40217 Düsseldorf (DE)
(74) Vertreter: Stenger, Watzke & Ring

(57) **Zusammenfassung**

Die vorliegende Erfindung betrifft eine Verbindungsvorrichtung zur lösbaren Verbindung mit einem Bauelement, wobei die Verbindungsvorrichtung eine mittels eines Antriebs zwischen einem verriegelnden und einem nicht verriegelnden Zustand bewegbarer Ankereinheit aufweist, mit der die Verbindungsvorrichtung am Bauelement festlegbar ist. Die vorliegende Erfindung hat es sich zur Aufgabe gemacht, eine Verbesserung zu erreichen und schlägt vor, daß der Antrieb ein drehbares Betätigungselement aufweist, wobei mit dessen Drehung über einen Winkel von kleiner als etwa 100 Grad, insbesondere von etwa 90 Grad, die Ankereinheit von einem in den anderen Zustand überführbar ist.

## Beschreibung

Die vorliegende Erfindung betrifft eine Verbindungsvorrichtung zur lösbaren Verbindung mit einem Bauelement, wobei die Verbindungsvorrichtung eine mittels eines Antriebs zwischen einem verriegelnden und einem nicht verriegelnden Zustand bewegbarer Ankereinheit aufweist, mit der die Verbindungsvorrichtung am Bauelement festlegbar ist.

Gattungsgemäße Vorrichtungen finden im Stand der Technik beispielsweise als Klemmverbindersysteme und dergleichen Anwendung, wenn insbesondere bei Regalsystemen, Messeaufbauten oder dergleichen Verbindungen zwischen Rahmenteilen wie Pfosten, Regalbrettern und ähnlichen Verbindungsstrukturen hergestellt werden sollen. Hierzu werden die einzelnen Elemente wie zum Beispiel Pfosten, Streben und dergleichen mit Hilfe gattungsgemäßer Vorrichtungen in einer Art Schnellverbindetechnik zusammengefügt, so daß ein belastbarer Aufbau erreicht werden kann. Um eine hohe Mobilität erreichen zu können, ist ein schneller Aufsowie Abbau angestrebt. Eine schnelle und einfache Handhabung der Verbindungsvorrichtung ist deshalb wünschenswert.

Eine gattungsgemäße Vorrichtung wird beispielsweise durch die EP 1 234 985 B1 offenbart, dort Klemmverbindersystem genannt, wobei eine Ankereinheit der Verbindungsvorrichtung klauenförmig ausgebildete, bewegbare Ankerelemente aufweist, die mit Streben eines Gegenelements wie eines Postens verbindbar sind. Hierzu werden die Ankerelemente in eine Öffnung des Pfostens eingeführt. Das Festlegen erfolgt dadurch, daß an den Enden der Ankerelemente ausgebildete Klauen den Rand der Öffnung hintergreifen und auf diese Weise die Verbindungsvorrichtung am Pfosten festlegen. Der Antrieb für die Ankerelemente besteht aus einem Getriebe, welches eine Drehbewegung eines Betätigungselements in eine translatorische Bewegung der Ankerelemente umsetzt.

Das Betätigungselement selbst ragt aus der Vorrichtung heraus und ist durch einen drehbar gelagerten Bolzen gebildet, der an einer herausregenden Stirnseite eine Kontur aufweist, die es erlaubt, ein Werkzeug wie einen Schraubenzieher, einen Sechskantschlüssel oder dergleichen formschlüssig anzusetzen, um eine Drehbewegung ausführen zu können.

Die gattungsgemäßen Vorrichtungen sind zwar hinsichtlich ihrer Verbindungsfunktion in der Praxis bewährt, jedoch erweist es sich in der Praxis als nachteilig, daß eine relativ große Drehbewegung zur Festlegung der Verbindungsvorrichtung bzw. zu deren Lösung erforderlich ist. Gerade bei manuellen Betätigungen ist dies aus ergonomischer Sicht nachteilig.

Die vorliegende Erfindung hat es sich deshalb zur **Aufgabe** gemacht, hier eine Verbesserung zu erreichen.

Als **Lösung** schlägt die Erfindung vor, daß der Antrieb ein drehbares Betätigungselement aufweist, wobei mit dessen Drehung über einen Winkel von kleiner als etwa 100 Grad, insbesondere von etwa 90 Grad, die Ankereinheit von einem in den anderen Zustand überführbar ist.

Hierdurch kann erreicht werden, daß die ergonomisch ungünstige Drehbewegung über einen großen Winkel auf einen kleinen Winkel reduziert und auf diese Weise nicht nur die Montage schneller durchgeführt werden kann, sondern darüber hinaus auch eine größere Zuverlässigkeit erreicht werden kann. Gerade unter Zeitdruck werden aufwendige Bewegungen vom Personal oftmals nicht vollständig ausgeführt, so daß eine Festlegung bei Verbindungsvorrichtungen des Standes der Technik nicht immer sicher ist, weil der jeweilige bestimmungsgemäße Zustand durch die Ankereinheit nicht vollständig erreicht wird. Hierdurch können Sicherheitsprobleme hervorgerufen werden. Die Erfindung vermeidet diese Probleme, weil bereits mit einer deutlich kleineren Drehbewegung als beim Stand der Technik üblich ein sicheres Erreichen des gewünschten Zustands der Ankereinheit erreicht werden kann. Auch unter Zeitdruck läßt sich auf diese Weise eine sichere Montage beziehungsweise Demontage erreichen. Das Betätigungselement kann vorzugsweise als Bolzen ausgebildet sein, der mit Ausformungen beziehungsweise Ausnehmungen versehen ist, um ein geeignetes Antriebswerkzeug ansetzen zu können. So kann das Betätigungselement beispielsweise als Sechskant ausgebildet sein, oder es kann auch einen Innensextant, eine Torx-Ausnehmung oder dergleichen aufweisen. Auf diese Weise kann der Antrieb einfach manuell betätigt werden. Die geringe erforderliche Drehung für den Zustandwechsel erweist sich dabei als Vorteil für die manuelle Bedienbarkeit.

Es wird ferner vorgeschlagen, daß die Ankereinheit im Bereich einer Kopplung mit dem Betätigungselement eine Ausnehmung aufweist, in die das Betätigungselement hineinragt. Es sei erwähnt, daß die Ausnehmung natürlich auch durch eine Öffnung gebildet sein kann, durch die das Betätigungselement hindurchragt. Auf diese Weise kann ein einfacher Antrieb der Ankereinheit durch das Betätigungselement erreicht werden. Die Ausnehmung kann natürlich auch durch eine Vertiefung gebildet sein, in die das Betätigungselement hineinragt. Der Bereich der Kopplung ist der Bereich, in den das Betätigungselement mit der Ankereinheit in mechanische Wirkverbindung eintritt, also eine Betätigung des Betätigungselements zu einer Bewegung der Ankereinheit führt.

Gemäß einer Weiterbildung weist das Betätigungselement im Kopplungsbereich mit der Ankereinheit einen im wesentlichen angeschnittenen, kreisförmigen Querschnitt auf. Diese Ausgestaltung erlaubt es, auf einfache Weise die gewünschte Betätigung der Ankereinheit mit nur einem geringen Drehwinkel des Betätigungselements zu erreichen. Zusätzliche mechanische Getriebeelemente, mit denen die gewünschte Bewegung der Ankereinheit erreicht werden kann, können vermieden werden. So läßt sich mit wenigen Bauelementen eine zuverlässig arbeitende Verbindungsvorrichtung erreichen.

Weiterhin wird vorgeschlagen, daß ausnehmungsseitig der Kopplungsbereich im wesentlichen linear ausgebildet ist. Auf diese Weise kann allein durch entsprechende Ausgestaltung des Betätigungselements ein gewünschter Antrieb erreicht werden. Die Herstellung kann insgesamt vereinfacht werden, weil die Ankereinheit speziell auf ihre Verankerungseigenschaften ausgebildet sein kann. Das Betätigungselement kann beispielsweise Ausformungen beziehungsweise Ausnehmungen im Umfangsbereich im Bereich der Kopplung mit der Ankereinheit aufweisen, um den gewünschten Bewegungseffekt der Ankereinheit erreichen zu können. Vorzugsweise ist eine entsprechende Kulisse am Betätigungselement umfangsseitig vorgesehen. Um eine möglichst dauerhafte, verschleißarme Vorrichtung zu erreichen, sollen Unstetigkeiten im Kopplungsbereich des Betätigungselements sowie der Ankereinheit soweit wie möglich vermieden werden.

So kann beispielsweise vorgesehen sein, daß der angeschnittene Bereich mit Einlaufschrägen bzw. Abrundungen versehen ist, um einerseits den Verschleiß an unstetigen Stellen zu vermeiden bzw. zu reduzieren und andererseits ein weitgehend gleichmäßiges Antriebsmoment erreichen zu können.

In einer Weiterbildung wird vorgeschlagen, daß Führungsmittel zur Führung eines Ankerelements der Ankereinheit in im wesentlichen translatorischer Richtung und wenigstens bereichsweise quer zur translatorischen Richtung vorgesehen sind. Auf diese Weise kann erreicht werden, daß die Ankerelemente der Ankereinheit in einer nicht verriegelnden Stellung in eine Öffnung des Pfostens eingeführt werden können und bei Überführen der Ankerelemente in die verriegelnde Stellung durch eine Querbewegung zur translatorischen Richtung mit ihren Klauen einen Rand der Öffnung des Pfostens übergreifen können. Auf diese Weise läßt sich eine einfache und zuverlässige sowie hoch belastbare Verbindung erreichen. Die Führungsmittel können beispielsweise durch Nuten, Schienen und dergleichen gebildet sein, die mit entsprechenden Gegenmitteln wie Profilen, Führungsbolzen und dergleichen zusammenwirken können.

Gemäß einer Weiterbildung weisen die Führungsmittel eine Ausformung auf, die in eine Führungskulisse eingreift. Die Ausformung kann beispielsweise durch eine Materialausformung des Ankerelements gebildet sein, durch einen am Ankerelement angeordneten Führungsstift oder dergleichen. Die Führungskulisse kann nutförmig oder auch in Form einer Öffnung ausgebildet sein, wobei die Ausformung in die Führungskulisse vorzugsweise permanent eingreift. Die Führungskulisse kann durch eine Schräge, durch eine Krümmung, oder auch durch hiervon zusammengesetzte Formen gebildet sein. Die Krümmung kann durch einen beispielsweise durch einen Kreis- oder Elipsenabschnitt gebildet sein. Natürlich kann die Krümmung auch in einer beliebig anderen Form ausgebildet sein. Die Führungskulisse kann daneben oder zusätzlich durch eine oder mehrere unterschiedliche Schrägen gebildet sein. Besonders vorteilhaft hat sich eine Führungskulisse erwiesen, die im wesentlichen bananenförmig ausgebildet ist. Hierdurch kann nicht nur ein gewünschter Antrieb der Ankerelemente erreicht werden, sondern darüber hinaus kann auch ein ergonomisch günstiger Drehmomentverlauf am Betätigungselement erreicht werden.

Nach einem weiteren Vorschlag der Erfindung ist die Ankereinheit in Richtung des nicht verriegelnden Zustands vorgespannt. Dies erlaubt es, daß die Ankereinheit im Kopplungsbereich in permanenter Kopplung mit dem Betätigungselement steht. Darüber hinaus kann auf einfache Weise eine beschädigte Verbindungsvorrichtung durch Entfernen des Betätigungselements gelöst werden, so daß eine Demontage in jedem Fall mit einfachen Mitteln erfolgen kann. Eine Bedienungsfreundlichkeit kann weiter verbessert werden.

Gemäß einem weiteren Vorschlage weist die Verbindungsvorrichtung eine Schließsicherung auf. Mit der Schließsicherung kann erreicht werden, daß die Verbindungsvorrichtung unabhängig von einer Betätigung des Betätigungselements im verriegelnden Zustand gehalten wird. Dies ist insbesondere bei komplexeren Aufbauten von Vorteil, bei denen durch eine Fehlbedienung möglicherweise einzelne Verbindungsvorrichtungen in einem nicht verriegelnden Zustand verbleiben würden und so ein Sicherheitsproblem entstehen könnte. Mit einem weiteren Vorteil schlägt die Erfindung vor, daß die Schließsicherung eine Anzeigeeinheit aufweist. Auf diese Weise ist es möglich, in einen bestehenden Aufbau die Verbindungsvorrichtungen hinsichtlich ihres Zustands direkt zu überprüfen, beispielsweise durch Sichtprüfung oder dergleichen. Die Sicherheit kann weiter verbessert werden.

In einer weiteren vorteilhaften Ausgestaltung wird vorgeschlagen, daß die Schließsicherung mittels eines Aktuators betätigbar ist. So kann beispielsweise vorgesehen sein, daß die Schließsicherung fernsteuerbar ist. Auf diese Weise kann eine Sicherung der Verbindungsvorrichtungen im verriegelnden Zustand beispielsweise von einer zentralen Stelle erreicht werden. Die Bedienbarkeit und die Sicherheit können weiter verbessert werden.

Darüber hinaus kann das Ankerelement in einem Verbindungsbereich mit dem Bauelement eine Ausformung aufweisen. Im Verbindungsbereich ist das Ankerelement mit dem Bauelement verbindbar. Das Ankerelement kann beispielsweise klauenförmig im Verbindungsbereich ausgebildet sein, wobei an den Klauen eine oder mehrere Ausformungen vorgesehen sein können. Diese können die Form von Spitzen, Wölbungen oder dergleichen aufweisen. Durch die Ausformung kann erreicht werden, daß der Übergang sowohl beim Spannen als auch beim Lösen weicher erfolgen kann. Ferner kann durch Einkerbung an einer Innenseite des Bauelements ein Abrutschen der Ankereinheit vermieden, zumindest eine Gefahr hierzu reduziert werden.

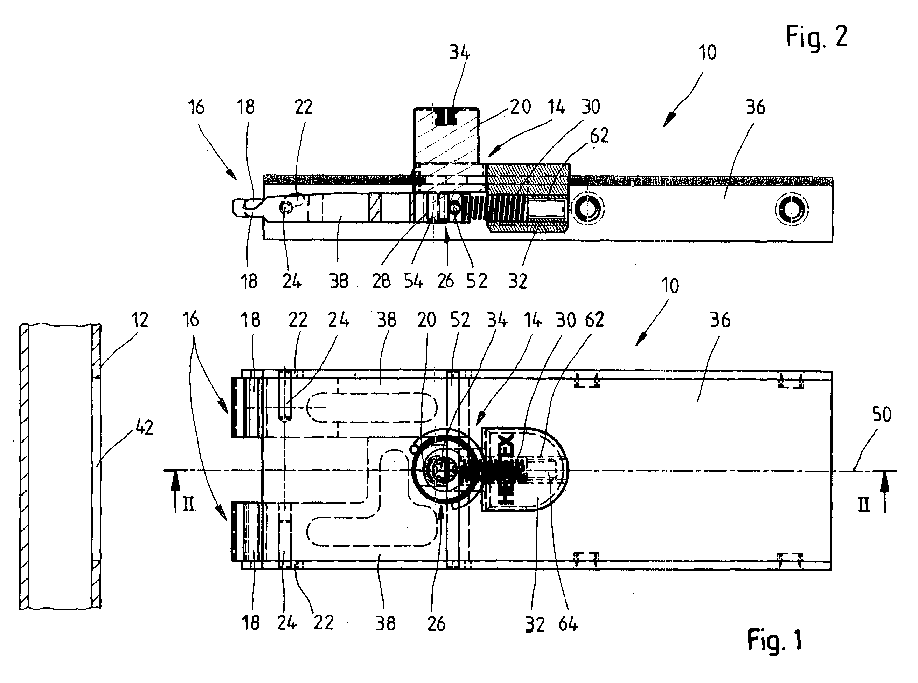

Weitere Vorteile und Merkmale sind der folgenden Beschreibung eines Ausführungsbeispiels zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel in Figur 1 verwiesen. Die Zeichnungen sind Schemazeichnungen und dienen lediglich der Erläuterung des folgenden Ausführungsbeispiels.

Es zeigen:
- Figur 1: eine Draufsicht auf eine erfindungsgemäße Klemmvorrichtung in einem nicht verriegelnden Zustand,
- Figur 2: einen Schnitt in Längsrichtung durch die Klemmvorrichtung gemäß Figur 1 entlang einer Linie II-II,
- Figur 3: ein Ankerelement in Draufsicht aus der erfindungsgemäßen Vorrichtung gemäß Figur 1,
- Figur 4: das Ankerelement gemäß Figur 3 in einer Seitenansicht,
- Figur 5: ein Klemmelement, mit welchem ein Führungsstift am Ankerelement befestigt wird,
- Figur 6: eine schematische perspektivische Ansicht eines Antriebs für die Verbindungsvorrichtung nach Figur 1,
- Figur 7: eine Draufsicht auf den Antrieb nach Figur 6 und
- Figur 8: eine Seitenansicht des Antriebs nach Figur 6.

Figur 1 zeigt in Draufsicht eine Verbindungsvorrichtung gemäß der vorliegenden Erfindung, hier Klemmvorrichtung 10 genannt. Die Klemmvorrichtung 10 weist ein Gehäuse 36 auf, in dem alle wesentlichen Einheiten kompakt angeordnet sind. Nach links herausragend dargestellt sind Riegelklauen 18 einer Ankereinheit 16, die Endbereiche von Ankerelementen 38 der Ankereinheit 16 darstellen. Die Ankerelemente 38 der Ankereinheit 16 sind in Längsrichtung des Gehäuses 36 verschiebbar angeordnet. In der gezeigten Darstellung nimmt die Ankereinheit 16 ihren nicht verriegelnden Zustand ein. In diesem Zustand ist der Klemmverbinder 10 an einem Pfosten 12 festlegbar, in dem die Riegelklauen 18 in eine Öffnung 42 des Pfostens 12 eingeführt werden. Durch Betätigung eines Betätigungselements 20 eines Antriebs 14 werden die Ankerelemente 38 und mit ihnen die Riegelklauen 18 axial in Richtung Gehäuse 36 eingezogen. Dabei werden sie zugleich quer zu ihrer axialen Bewegungsrichtung bewegt, so daß die Riegelklauen 18 einen nicht dargestellten Randbereich der Öffnung 42 im verriegelnden Zustand hintergreifen und auf diese Weise den Klemmverbinder 10 am Pfosten 12 festlegen.

Zum Lösen des Klemmverbinders 10 vom Pfosten 12 wird umgekehrt verfahren, wobei die Ankerelemente 38 in Richtung Pfosten 12 axial in Längsrichtung des Gehäuses 36 verschoben werden, wobei sie sich zugleich quer derart bewegen, daß sie im wesentlichen in einer Ebene zum Liegen kommen (siehe auch Figur 2). In diesem Zustand kann der Klemmverbinder 10 vom Pfosten 12 gelöst werden.

Figur 2 zeigt den Klemmverbinder 10 gemäß Figur 1 in einer Schnittansicht entlang einer Linie II-II. Zu erkennen ist in dieser Darstellung, daß die Riegelklauen 18 der Ankerelemente 38 im nicht verriegelnden Zustand, wie er in Figur 2 dargestellt ist, im wesentlichen in einer Ebene liegen und nach links aus dem Gehäuse 36 herausragen. Um eine gute Funktion erreichen zu können, ist die Öffnung 42 des Pfostens 12 schlitzartig ausgebildet, so daß die hervorstehenden Riegelklauen 18, die in der in Figur 2 dargestellten Position angeordnet sind, in die Öffnung 42 eingeführt werden können. Beim Überführen des Klemmverbinders 10 in den verriegelnden Zustand werden die Ankerelemente 38 nicht nur in Richtung des Gehäuses 36 gezogen, sondern, wie sich anhand von Figur 2 beschreiben läßt, es wird eine der Riegelklauen 18 nach oben und die andere nach unten bewegt, so daß die Riegelklauen 18 den Rand der Öffnung 42 hintergreifen können.

Um diese Bewegung ausführen zu können, sind an den Ankerelementen 38 Führungsstifte 24 angeordnet, die in bananenförmigen Führungskulissen 22 von Seitenwänden des Gehäuses 36 geführt sind. Die Führungsstifte 24 sowie die Kulissen 22 bewirken, daß mit einer Axialverschiebung der Ankerelemente 38 die Riegelklauen 18 zugleich eine Auf- bzw. Abbewegung quer zur Axialverschiebung ausführen. Die bananenförmige Krümmung der Führungskulisse 22 ist dabei derart ausgestaltet, daß betätigungsseitig ein möglichst gleichmäßiges Drehmoment erreicht wird. Vorliegend ist die Bananenform derart ausgebildet, daß etwa ein Drittel des Betätigungswegs im Wesentlichen linear und der weitere Betätigungsweg gekrümmt erfolgt.

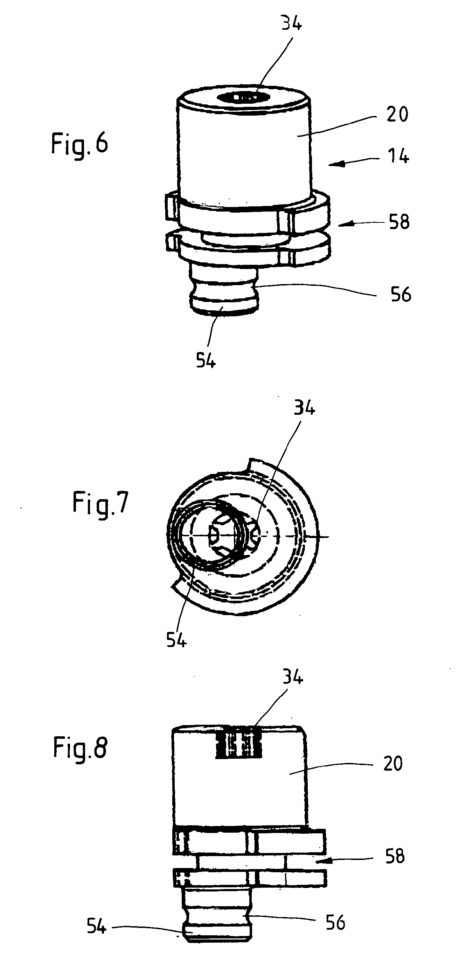

Auf einer Achse 50 des Gehäuses 36, welches auch dessen Längsachse darstellt, ist das Betätigungselement 20 angeordnet, welches vorliegend als Bolzen ausgebildet ist und den im Wesentlichen mittig angeordneten Antrieb 14 bildet (Figuren 6 bis 8). Der Antrieb 14 ist in den Figuren 6 bis 8 dargestellt. Der Antrieb 14 weist in dieser Ausgestaltung lediglich ein einziges Betätigungselement 20 auf. Bedienungsseitig weist das Betätigungselement 20 einen Torx-Innensechskant 34 auf, in dem ein entsprechender Schlüssel angesetzt werden kann, um das Betätigungselement 20 manuell durch Drehen zu betätigen. Der Antrieb 14 weist gehäuseseitig einen Lagerungsbereich 58 auf, mittels dem er am Gehäuse 36 drehbar gelagert ist. Ferner ragt in das Gehäuse 36 ein exzentrisch angeordneter Zapfen 54 hinein, der im wesentlichen kreiszylindrisch ausgebildet ist. Der Zapfen 54 weist eine umlaufende Nut 56 auf (Figuren 6, 8).

Wie aus Figur 2 zu entnehmen ist, ragt der Zapfen 54 in eine durch die Ankerelemente 38 gebildete Öffnung 28. Den Riegelklauen 18 gegenüberliegend am anderen Ende im Bereich der Öffnung 28 ist ein Verbindungsstift 52 angeordnet, mit dem die beiden Ankerelemente 38 bezüglich Verschiebbarkeit gekoppelt sind. Hierzu ist der Verbindungsstift 52 nicht nur mit den Ankerelementen 38 verbunden, sondern darüber hinaus mit seinen nicht näher bezeichneten Endbereichen auch jeweils in einem zur Achse 50 parallelen, nicht näher bezeichneten Langloch einer Gehäusewand des Gehäuses 36 verschiebbar gelagert. Der Verbindungsstift 52 liegt an der Nut 56 des Zapfens 54 an. Dies wird dadurch erreicht, daß eine durch ein vom Gehäuse 36 gehaltenes Wiederlager 32 gegengelagerte Spiralfeder 30 gegen ein Federauflager 40 der Ankerelemente 38 drückt. Vorliegend ist zum Einstellen einer Federvorspannung eine in einer Gewindebohrung 62 angeordnete Madenschraube 64 vorgesehen. Dadurch wird der Verbindungsstift 52 permanent gegen den Zapfen 54 gedrückt, wobei hierdurch ein Kopplungsbereich 26 gebildet wird. Das Widerlager 32 weist eine nicht näher dargestellte Madenschraube als einstellbares Vorspannmittel auf, mit der die Vorspannung der Spiralfeder 30 bedarfsgerecht eingestellt werden kann. Natürlich können auch andere geeignete Mittel zur Änderung der Vorspannung der Spiralfeder 30 vorgesehen sein.

Aus Figur 2 ist zu erkennen, daß bereits eine Drehung des Betätigungselements 20 um einen Winkel <90° dazu führt, daß die Ankerelemente 28 über den Verbindungsstift 52 sowie den Zapfen 54 in das Gehäuse 36 des Klemmverbinders 10 entgegen der Federvorspannung durch die Spiralfeder 30 hineingezogen werden. Wird das Betätigungselement 20 zurückgedreht, so wird aufgrund der Federvorspannung der Kopplungsbereich 26 aufrechterhalten und der Verbindungsstift bewegt aufgrund der Federvorspannung die Klemmelemente 38 in Richtung Gehäuseausgang des Gehäuses 36. Diese Bewegung erfolgt so lange, bis die maximal mögliche Bewegung in diese Richtung erreicht wird, die durch die Schnittkante 56 des Zapfens 54 vorgegeben ist. In den Figuren nicht zu erkennen ist eine neben dem Torx-Innensechskant 34 am Betätigungselement 20 angeordnete Markierung, mit der ein Verriegelungszustand der Klemmvorrichtung 10 angezeigt wird. Vorliegend ist diese als Pfeil ausgebildet, der im geöffneten Zustand auf ein neben dem Betätigungselement 20 am Gehäuse 36 eingeprägtes Symbol für "offen" zeigt. Im verriegelnden Zustand weist der Pfeil auf ein weiteres, diesem Zustand entsprechendes Symbol, beispielsweise "geschlossen". Natürlich können auch Schloßsymbole oder dergleichen vorgesehen sein, um die Zustände anzeigen zu können.

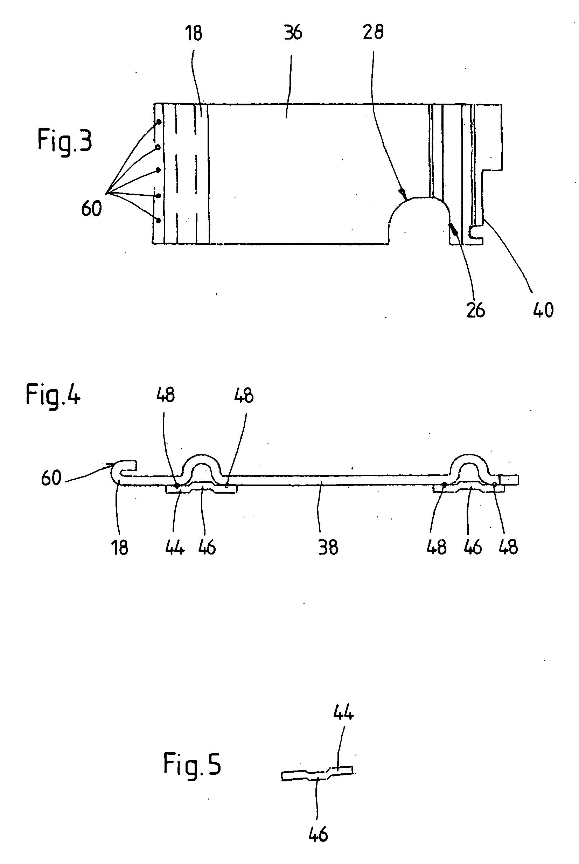

Figur 3 zeigt eines der Ankerelemente 38 in vergrößerter Darstellung. Zu erkennen ist hier ein Teil der Öffnung 28, wobei der andere Teil der Öffnung 28 durch das zweite Ankerelement 38 gebildet ist. Ferner ist der Bereich 26 erkennbar, in dem das Ankerelement 38 eine nicht näher bezeichnete Ausformung aufweist, die zur Aufnahme des Verbindungsstifts 52 vorgesehen ist. Im Bereich der Riegelklaue 18 ist eine weitere Ausformung vorgesehen, die zur Aufnahme des Führungsstifts 24 dient. An der Riegelklaue 18 sind Spitzen 60 angeordnet.

Figur 4 zeigt eine Seitenansicht des Ankerelements 38 gemäß Figur 3. Im linken Bereich ist die Riegelklaue 18 zu erkennen, an die sich die Ausformung für den Führungsstift 24 anschließt. Die Ausformung ist mit einem Klemmelement 44 verschlossen, welches mittels Schweißpunkten 48 am Ankerelement 38 festgelegt ist. Damit der Führungsstift 24 in der Ausnehmung des Ankerelements 38 ordentlich festgelegt ist, weist das Klemmelement 44 eine Ausformung 46 auf (Figur 5). Hierdurch wird die Ausformung in ihrem inneren Durchmesser derart reduziert, daß der Führungsstift 24 in ihr festgelegt ist. Die gleiche Befestigung ist auch für das Verbindungselement 52 vorgesehen (Figur 4).

Das in den Figuren dargestellte Ausführungsbeispiel dient lediglich der Erläuterung der Erfindung und ist für diese nicht beschränkend.

### Bezugszeichenliste

- 10: Klemmverbinder
- 12: Pfosten
- 14: Antrieb
- 16: Ankereinheit
- 18: Riegelklaue
- 20: Betätigungselement
- 22: Bananenförmige Führungskulisse
- 24: Führungsstift
- 26: Kopplungsbereich
- 28: Öffnung
- 30: Spiralfeder
- 32: Widerlager
- 34: Torx-Innensechskant
- 36: Gehäuse
- 38: Ankerelement
- 40: Federauflager
- 42: Öffnung
- 44: Klemmelement
- 46: Ausformung
- 48: Verschweißung
- 50: Achse
- 52: Verbindungsstift
- 54: Zapfen
- 56: Nut
- 58: Lagerungsbereich
- 60: Spitzen
- 62: Gewindebohrung
- 64: Madenschraube

## Patentansprüche

1. Verbindungsvorrichtung (10) zur lösbaren Verbindung mit einem Bauelement (12), wobei die Verbindungsvorrichtung (10) eine mittels eines Antriebs (14) zwischen einem verriegelnden und einem nicht verriegelnden Zustand bewegbare Ankereinheit (16) aufweist, mit der die Verbindungsvorrichtung (10) am Bauelement (12) festlegbar ist,
**dadurch gekennzeichnet,**
**daß** der Antrieb (14) ein drehbares Betätigungselement (20) aufweist, wobei mit dessen Drehung über einen Winkel von kleiner als etwa 100°, insbesondere von etwa 90°, die Ankereinheit (16) von einem in den anderen Zustand überführbar ist.

2. Verbindungsvorrichtung nach Anspruch 1, **dadurch gekennzeichnet, daß** die Ankereinheit (16) im Bereich (26) einer Kopplung mit dem Betätigungselement (20) eine Ausnehmung (28) aufweist, in die das Betätigungselement (20) hineinragt.

3. Verbindungsvorrichtung nach Anspruch 1 oder 2, **dadurch gekennzeichnet, daß** das Betätigungselement (20) im Kopplungsbereich (26) mit der Ankereinheit (16) einen im wesentlichen angeschnittenen, kreisförmigen Querschnitt aufweist.

4. Verbindungsvorrichtung nach einem der Ansprüche 1 bis 3, **dadurch gekennzeichnet, daß** ausnehmungsseitig der Kopplungsbereich (26) im wesentlichen linear ausgebildet ist.

5. Verbindungsvorrichtung nach einem der Ansprüche 1 bis 4, **dadurch gekennzeichnet, daß** Führungsmittel (22, 24) zur Führung eines Ankerelements (38) der Ankereinheit (16) in im wesentlichen translatorischer Richtung und wenigstens bereichsweise quer zur translatorischen Richtung vorgesehen sind.

6. Verbindungsvorrichtung nach Anspruch 5, **dadurch gekennzeichnet, daß** die Führungsmittel (22, 24) eine Ausformung (24) aufweisen, die in eine Führungskulisse (22) eingreift.

7. Verbindungsvorrichtung nach Anspruch 6, **dadurch gekennzeichnet, daß** die Führungskulisse (22) im wesentlichen bananenförmig ausgebildet ist.

8. Verbindungsvorrichtung nach einem der Ansprüche 1 bis 7, **dadurch gekennzeichnet, daß** die Ankereinheit (16) in Richtung des nicht verriegelnden Zustands vorgespannt ist.

9. Verbindungsvorrichtung nach einem der Ansprüche 1 bis 8, **gekennzeichnet durch** eine Schließsicherung.

10. Verbindungsvorrichtung nach Anspruch 9, **dadurch gekennzeichnet, daß** die Schließsicherung eine Anzeigeeinheit aufweist.

11. Verbindungsvorrichtung nach Anspruch 9 oder 10, **dadurch gekennzeichnet, daß** die Schließsicherung mittels eines Aktuators betätigbar ist.

12. Verbindungsvorrichtung nach einem der Ansprüche 1 bis 11, **dadurch gekennzeichnet, daß** das Ankerelement (38) in einem Verbindungsbereich mit dem Bauelement (12) eine Ausformung (60) aufweist.
